# EUROPÄISCHE PATENTSCHRIFT

(11) **EP 0 958 727 B1**
(45) Veröffentlichungstag und Bekanntmachung des Hinweises auf die Patenterteilung: **21.08.2002**
(21) Anmeldenummer: 99108436.9
(22) Anmeldetag: 29.04.1999
(51) Int. Cl.: A01D 41/12

(54) **Spreuverteiler für einen Mähdrescher**
Chaff spreading device for a combine
Dispositif d'épandage de balle pour moissonneuse-batteuse

(30) Priorität: 19.05.1998 DE 19822499
(43) Veröffentlichungstag der Anmeldung: 24.11.1999
(73) Patentinhaber: Schrattenecker, Franz, A-4773 Eggerding (AT)
(72) Erfinder: Schrattenecker, Franz, A-4773 Eggerding (AT)
(74) Vertreter: Zinnecker, Armin, Dipl.-Ing.

(56) Entgegenhaltungen:
- EP-A- 0 181 500
- EP-A- 0 631 717
- EP-A- 0 727 135
- WO-A-93/13643
- WO-A-95/15077
- DE-A- 3 825 125
- DE-A- 3 826 321
- DE-C- 278 684
- DE-U- 9 013 484
- US-A- 1 639 447
- US-A- 3 071 246
- US-A- 3 276 451
- US-A- 3 860 010

## Beschreibung

Die Erfindung betrifft einen Spreuverteiler für einen Mähdrescher oder dergleichen zum Verteilen der Spreu. Die Erfindung betrifft ferner einen Mähdrescher mit einem derartigen Spreuverteiler.

In einem Mähdrescher ist üblicherweise ein Schüttler vorhanden, unter dem sich ein Siebkasten befindet. Der Reinigungswind vom Mähdrescher bläst die durch das Reinigungssieb fallende Spreu nach hinten. Von den bisher bekannten Spreuverteilern wird die vom Reinigungssystem des Mähdreschers kommende Spreu nur unzureichend erfaßt. Dies gilt insbesondere für Schwerteile wie Unkrautsamen und dergleichen. Diese Teile fallen bei den bekannten Spreuverteilem unverteilt in der Breite des Reinigungssystems auf den Boden. Ferner ist bei den bekannten Spreuverteilern die Verteilbreite sehr gering und - bezogen auf die Mähdrescherschneidwerksbreite - sehr ungleichmäßig.

Aus der DE-A-3826321 ist eine Verteilvorrichtung für Streugut bekannt, die im Abgabebereich eines Siebkastens angeordnet sein kann, um das Streugut seitlich gleichmäßig verteilt abzugeben. Damit der Streubereich des Streuguts in möglichst weiten Grenzen variierbar ist, setzt sich die Verteilvorrichtung aus einem Sammelförderer und einem Wurfförderer zusammen. Das Gehäuse der Verteilvorrichtung kann in der Form einer Mulde ausgebildet sein, in der ein als Förderschnecke ausgebildeter Sammelförderer vorgesehen sein kann, der das Streugut einem seitlich angeordneten Wurfförderer zuführt.

Aufgabe der Erfindung ist es, einen verbesserten Spreuverteiler für einen Mähdrescher oder dergleichen vorzuschlagen.

Erfindungsgemäß wird diese Aufgabe durch die Merkmale des Anspruchs 1 gelöst. Der Spreuverteiler umfaßt einen Trog mit einer darin antreibbar gelagerten Schnecke.

Der Trog ist nach oben offen. Er kann tonnenförmig ausgestaltet sein. Es kann sich um einen halbzylinderförmigen Trog handeln. Die darin antreibbar gelagerte Schnecke ist rechts- und linksgängig und wird derart angetrieben, daß die Spreu jeweils nach außen gefördert wird. Die Schnecke ist dementsprechend auf einer Seite rechtsgängig und auf der anderen Seite linksgängig. Sie fördert die Spreu in die jeweiligen Außenbereiche des Troges. Der Spreuverteiler ist vorzugsweise unmittelbar hinter dem Reinigungssystem des Mähdreschers angebracht.

Hinter dem Spreuverteiler bzw. hinter dem Trog ist ein nach oben weisendes Spreuteilungsblech vorgesehen. Dieses Spreuteilungsblech verläuft im wesentlichen vertikal. Es reicht vorzugsweise nahe an die Unterseite des Siebkastens bzw. des hinteren Endes des Siebkastens heran. Das Spreuteilungsblech befindet sich in Fahrtrichtung des Mähdreschers hinter dem Spreuverteiler bzw. dem Trog. Es verläuft in einer Richtung quer zur Fahrtrichtung des Mähdreschers. Durch das Spreuteilungsblech wird gewährleistet, daß die Spreu nicht über den Spreuverteiler hinaus weitergeblasen wird.

Der Spreuverteiler bzw. der Trog ist nach hinten verfahrbar. Er kann also in Fahrtrichtung des Mähdreschers nach hinten in Richtung zu einem am hinteren Ende des Mähdreschers möglicherweise vorhandenen Strohhäcksler bewegt werden. Der Spreuverteiler kann so weit nach hinten verfahren werden, bis sein vorderes Ende im Bereich des nach oben weisenden Spreuteilungsbleches liegt. Das nach oben weisende Spreuteilungsblech liegt dann im Bereich der Vorderseite des Spreuverteilers. Hierdurch wird dem Spreuverteiler nicht mehr die Spreu zugeführt, sondern das Langstroh, das von dem Siebkasten bzw. vom hinteren Ende des Siebkastens herabfällt. Dies ist insbesondere bei der Verarbeitung von Mais von Vorteil. Bei Maisdrusch ist es oftmals wünschenswert, daß das Langstroh nicht gehäckselt, sondern nur verteilt wird. Um dies zu erreichen kann der hinter dem Spreuverteiler üblicherweise vorgesehene Häcksler durch ein Blech, vorzugsweise ein schwenkbares Blech, abgedeckt werden. Das Blech kann derart angeordnet sein, insbesondere derart geneigt sein, daß das Langstroh dem Spreuverteiler zugeführt wird. Hierdurch ist es möglich, kraftsparend das Stroh zu verteilen.

Nach einer vorteilhaften Weiterbildung weist der Spreuverteiler bzw. der Trog in seinen Außenbereichen jeweils eine Öffnung in seinem Boden auf. Vorzugsweise befinden sich die Öffnungen an den Enden des Spreuverteilers bzw. Troges. Die zu den Enden des Spreuverteilers bzw. Troges geförderte Spreu fällt durch die Öffnungen bzw. Löcher hindurch nach unten.

Vorzugsweise ist in den Außenbereichen des Spreuverteilers bzw. Troges jeweils ein Gebläse vorgesehen. Dabei handelt es sich vorzugsweise um Radialgebläse. Die Gebläse sind vorzugsweise unter den beschriebenen Öffnungen in den Endbereichen des Spreuverteilers bzw. Troges angeordnet. Die durch die Öffnungen bzw. Löcher hindurchfallende Spreu wird von den Gebläsen gleichmäßig verteilt. Die Radialgebläse können vertikal verlaufende Rotorachsen aufweisen.

Nach einer weiteren vorteilhaften Weiterbildung ist in den Außenbereichen des Spreuverteilers bzw. Troges jeweils ein Wurfgebläse vorgesehen. Hierbei kann es sich um Radialgebläse handeln. Die Wurfgebläse können horizontal verlaufende Rotorachsen aufweisen. Die Rotorachsen der Wurfgebläse fluchten vorzugsweise mit der Achse des Spreuverteilers bzw. mit der Drehachse der Schnecke.

Vorteilhaft ist es, wenn die Gebläse bzw. Wurfgebläse drehbar gelagert sind. Dadurch kann der Auswurfwinkel auf einfache Weise verändert werden. Eine weitere vorteilhafte Weiterbildung ist dadurch gekennzeichnet, daß am Gebläseauswurf, also am Auswurf der Gebläse bzw. Wurfgebläse, ein oder mehrere Luftflügel und/oder Leitbleche und/oder Finger vorgesehen sind. Die Luftflügel bzw. Leitbleche bzw. Finger sind vorzugsweise verstellbar. Durch die erwähnten Maßnahmen (drehbare Lagerung der Gebläse bzw. Wurfgebläse und/oder vorzugsweise verstellbare Luftflügel etc.) kann ein gleichmäßiges Streubild und eine exakte Streubreite - bezogen auf die jeweilige Schneidwerksbreite - erreicht werden. Es ist möglich, durch die erwähnten Maßnahmen Einfluß auf die Auswurfrichtung zu nehmen sowie auch auf den Strahlwinkel und die Menge der Spreu, die die Gebläse bzw. Wurfgebläse im jeweiligen Winkelbereich verläßt.

Nach einer weiteren vorteilhaften Weiterbildung kann eine Anordnung vorgesehen sein, bei der die Wurfgebläse die Spreu in jeweils ein weiteres Gebläse fördern, das vorzugsweise an einen Strohhäcksler montiert ist und das die Spreu vorzugsweise in den Verteilerkasten des Strohhäckslers bläst.

Ferner kann eine Anordnung vorgesehen sein, bei der die Wurfgebläse mit jeweils einem Spreukanal versehen sind. Der Spreukanal kann die Spreu in die Strohhaube blasen, so daß sie über den Strohhäcksler verteilt wird. Der Spreukanal kann allerdings auch derart angeordnet sein, daß die Spreu in den Außenbereich des Strohhäckslerverteilerkastens geblasen wird, so daß die Spreu auf diese Weise verteilt wird.

Eine weitere vorteilhafte Weiterbildung ist dadurch gekennzeichnet, daß in den Außenbereichen des Spreuverteilers bzw. des Troges jeweils ein Schneckenförderer vorgesehen ist. Der Schneckenförderer kann derart angeordnet sein, daß er die Spreu in die Strohhaube des Mähdreschers fördert. Nach einer weiteren vorteilhaften Weiterbildung ist an den Enden der Schneckenförderer jeweils ein weiteres Gebläse vorhanden.

Die Erfindung betrifft ferner einen Mähdrescher, der erfindungsgemäß durch einen erfindungsgemäßen Spreuverteiler gekennzeichnet ist. Vorzugsweise weist der Mähdrescher einen Strohhäcksler auf. Der Strohhäcksler kann abdeckbar sein, vorzugsweise durch ein Blech, vorzugsweise durch ein verschwenkbares Blech. Dies ist insbesondere dann von Vorteil, wenn ein nach oben weisendes Spreuteilungsblech vorhanden ist und der Spreuverteiler in Fahrtrichtung des Mähdreschers nach hinten verfahrbar ist. Dann kann der Spreuverteiler auf einfache und vorteilhafte Weise zum Verteilen von Langstroh eingesetzt werden, was insbesondere bei der Verarbeitung von Mais vorteilhaft ist. Der Strohhäcksler wird durch das vorzugsweise verschwenkbare Blech abgedeckt, so daß das vom hinteren Ende des Schüttlers herabfallende Langstroh durch den Spreuverteiler verteilt wird.

An dem Strohhäcksler können weitere Gebläse vorgesehen sein.

Eine weitere vorteilhafte Weiterbildung ist dadurch gekennzeichnet, daß der Spreuverteiler ein Gebläse oder Wurfgebläse mit einem in die Strohhaube des Mähdreschers oder in den Außenbereich des Strohhäcksler-Vertellerkastens weisenden Spreukanal aufweist. Der Spreuverteiler kann einen Schneckenförderer aufweisen, der die Spreu in die Strohhaube des Mähdreschers fördert.

Ausführungsbeispiele der Erfindung werden nachstehend anhand der beigefügten Zeichnung im einzelnen erläutert. In der Zeichnung zeigt
- Fig. 1: einen Spreuverteiler im hinteren Teil eines Mähdreschers in einer Seitenansicht,
- Fig. 2: den Spreuverteiler gemäß Fig. 1 in einer Ansicht von oben,
- Fig. 3: die Ausführungsform gemäß Fig. 1 mit nach hinten verfahrenem Spreuverteiler in einer Seitenansicht,
- Fig. 4: die Ausführungsform gemäß Fig. 3 in einer Ansicht von oben,
- Fig. 5: die Ausführungsform gemäß Fig. 1 mit einem Wurfgebläse in einer Seitenansicht,
- Fig. 6: die Ausführungsform gemäß Fig. 5 in einer Ansicht von oben,
- Fig. 7: die Ausführungsform gemäß Fig. 5 mit einem weiteren Gebläse in einer Seitenansicht,
- Fig. 8: die Ausführungsform gemäß Fig. 7 in einer Ansicht von oben,
- Fig. 9: eine Ausführungsform mit einem Wurfgebläse, das mit einem in die Strohhaube des Mähdreschers weisenden Spreukanal versehen ist, in einer Seitenansicht,
- Fig. 10: die Ausführungsform gemäß Fig. 9 in einer Ansicht von oben,
- Fig. 11: eine Ausführungsform mit einem Wurfgebläse, das mit einem in den Außenbereich des Strohhäckslerverteilerkastens weisenden Spreukanal versehen ist, in einer Seitenansicht,
- Fig. 12: die Ausführungsform gemäß Fig. 11 in einer Ansicht von oben,
- Fig. 13: eine Ausführungsform mit einem Schneckenförderer in einer Seitenansicht,
- Fig. 14: die Ausführungsform gemäß Fig. 13 in einer Ansicht von oben,
- Fig. 15: eine Ausführungsform mit einem Schneckenförderer und einem weiteren Gebläse in einer Seitenansicht und
- Fig. 16: die Ausführungsform gemäß Fig. 15 in einer Ansicht von oben.

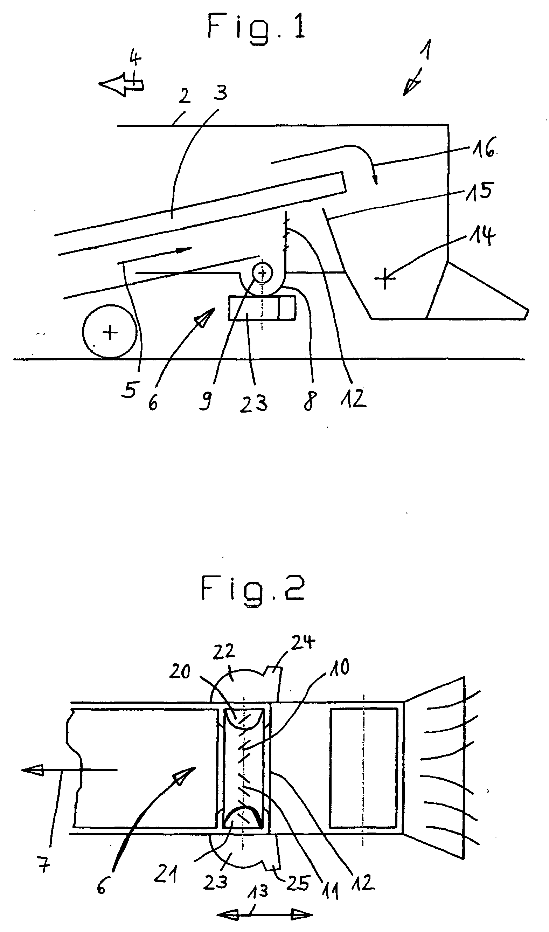

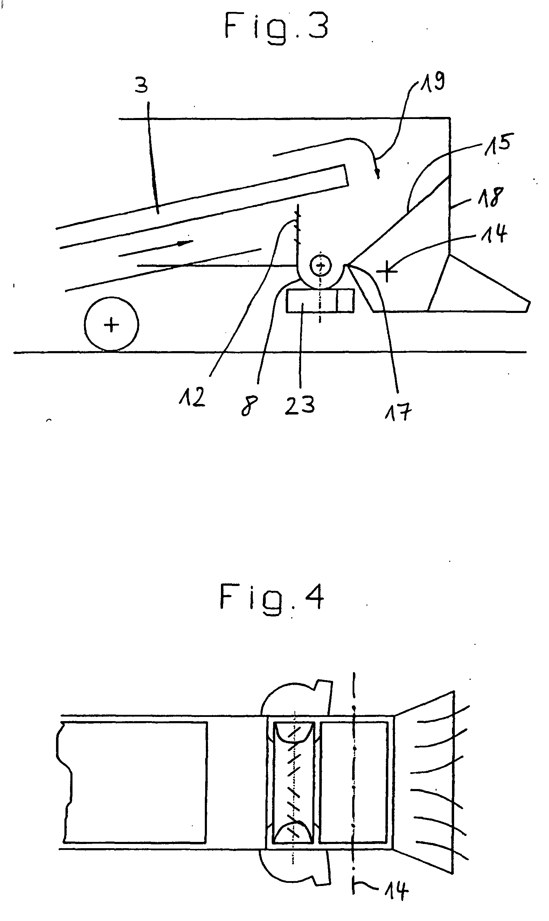

In den Fig. 1 und 2 ist der hintere Teil eines Mähdreschers 1 gezeigt, in dessen Gehäuse 2 ein Schüttler (in der Zeichnung nicht dargestellt) vorgesehen ist, unter dem sich ein Siebkasten 3 befindet. Der Siebkasten 3 verläuft in Fahrtrichtung 4 des Mähdreschers 1 leicht geneigt von vorne unten nach hinten oben.

Die durch das Sieb (Reinigungssieb) 3 fallende Spreu wird von dem durch den Pfeil 5 angedeuteten Reinigungswind des Mähdreschers nach hinten geblasen. Im Bereich des hinteren Endes des Siebes 3 befindet sich unter diesem Sieb 3 der Spreuverteiler 6, der aus einem im wesentlichen halbzylinderförmigen, oben offenen, quer zur Mähdrescher-Längsrichtung 7 verlaufenden Trog 8 und einer darin antreibbar gelagerten Schnecke 9 besteht. Die Schnecke 9 ist in der aus Fig. 2 ersichtlichen Weise auf einer Seite 10 rechtsgängig und auf der anderen Seite 11 linksgängig. Sie wird derart angetrieben, daß die Spreu jeweils nach außen gefördert wird.

In Fahrtrichtung 4 des Mähdreschers 1 hinter dem Spreuverteiler 6 ist ein nach oben weisendes, im wesentlichen vertikales, quer zu Mähdrescher-Längsrichtung 7 verlaufendes Spreuteilungsblech 12 vorgesehen, durch das gewährleistet wird, daß die Spreu nicht über den Spreuverteiler 6 hinaus weitergeblasen wird. Das Spreuteilungsblech endet unterhalb der Unterseite des hinteren Bereichs des Siebes 3. In der in Fig. 1 gezeigten Stellung des Spreuverteilers 6 schließt sich das Spreuteilungsblech 12 tangential an das hintere Ende des Troges 8 an.

Der Spreuverteiler 6 kann in Richtung des Doppelpfeils 13 in Fahrtrichtung 7 des Mähdreschers nach hinten verfahren werden, bis er die in Fig. 3 gezeigte Stellung einnimmt, in der er sich nicht mehr - wie in Fig. 1 gezeigt - vor dem Spreuteilungsblech 12 befindet, sondern dahinter, und zwar derart, daß sich das Spreuteilungsblech 12 tangential an das hintere Ende des Troges 8 anschließt. Die in Fig. 3 gezeigte Anordnung ist insbesondere bei der Verarbeitung von Mais vorteilhaft. Im Bereich der Einzugsöffnung des um eine horizontale, quer zur Fahrtrichtung 7 des Mähdreschers verlaufende Achse 14 drehbaren Strohhäckslers ist ein Abdeckblech 15 vorgesehen, das in der Fig. 1, in der der Spreuverteiler 6 nach vorne verfahren ist, ebenfalls nach vorne geschwenkt ist, so daß das Langstroh über das hintere Ende des Siebes 3 in Richtung des Pfeiles 16 in den Strohhäcksler 14 fallen kann. Wenn der Spreuverteiler 6 in der aus Fig. 3 ersichtlichen Weise nach hinten verfahren wird, wird auch das Abdeckblech 15 um seine im Bereich der Einzugsöffnung des Häckslers 14 liegende, horizontale, quer zur Fahrtrichtung 7 des Mähdreschers verlaufende Achse 17 nach hinten verschwenkt, so daß es die aus Fig. 3 ersichtliche Lage einnimmt, in der das obere Ende des Abdeckblechs 15 an der hinteren Wand 18 des Mähdreschers anliegt. Das über das hintere Ende des Siebes 3 fallende Langstroh wird hierdurch in Richtung des Pfeiles 19 umgelenkt und dem Spreuverteiler 6 zugeführt, der das Langstroh verteilt.

Der Trog 8 weist an seinen äußeren Enden jeweils eine Öffnung 20, 21 in seinem Boden auf, unter denen sich jeweils ein Radialgebläse 22, 23 befindet, deren Rotorachsen jeweils vertikal verlaufen. Die Gebläse 22, 23 sind um ihre vertikalen Rotorachsen drehbar gelagert, so daß der Winkel der Auswurföffnungen 24, 25 verändert werden kann. Die Gebläse 22, 23 sind an der Unterseite des Troges 8 befestigt. Sie bewegen sich mit dem Trog 8 mit, wenn dieser in Richtung des Doppelpfeils 13 verfahren wird.

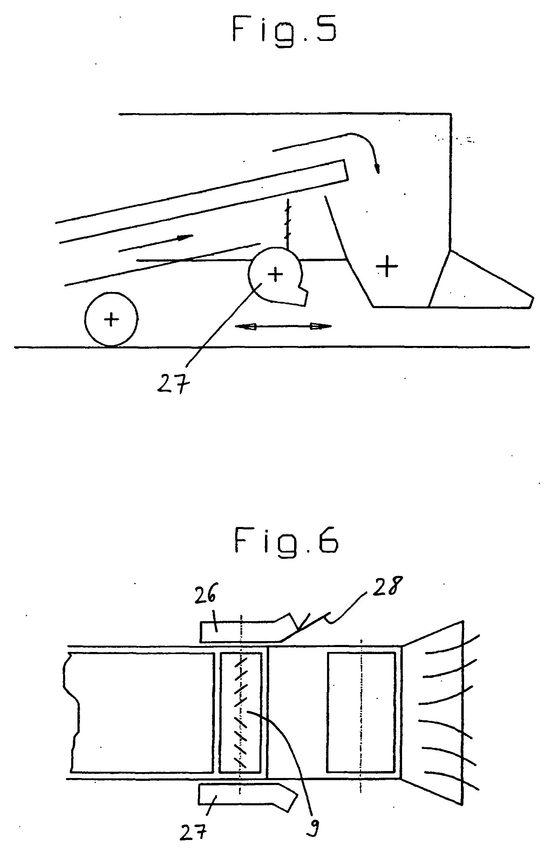

Bei der in den Fig. 5 und 6 gezeigten Ausführungsform wird die Spreu von der Schnecke 9 in jeweils ein Wurfgebläse 26, 27 gefördert, die sich an den äußeren Enden des Spreuverteilers befinden. Bei den Wurfgebläsen 26, 27 handelt es sich um Radialgebläse, deren Rotorachse horizontal verlaufen und mit der Drehachse der Schnecke 9 fluchten. An den Auswurföffnungen der Wurfgebläse 26, 27 sind verstellbare Leitbleche 28 vorgesehen.

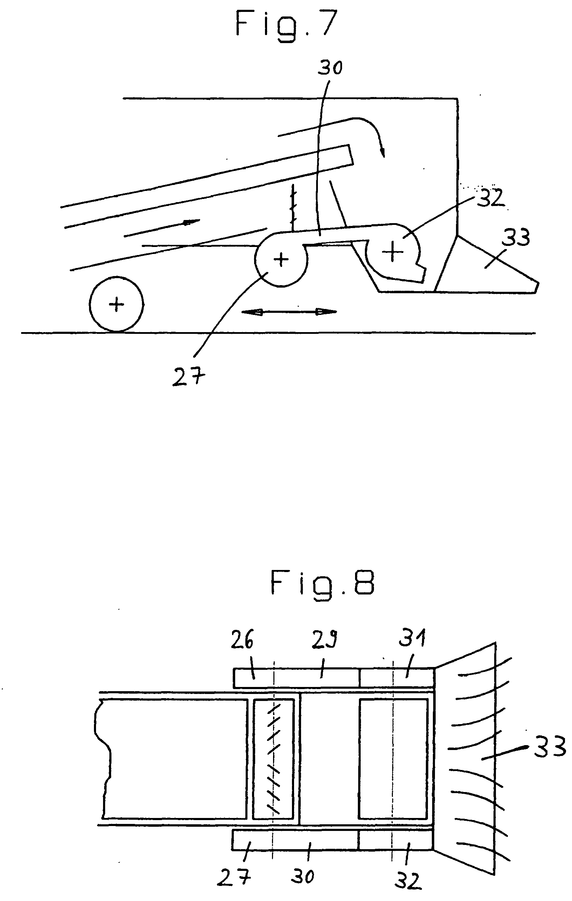

Bei der in den Fig. 7 und 8 gezeigten Ausführungsform sind die Wurfgebläse 26, 27 über jeweils einen Spreukanal 29, 30 mit jeweils einem weiteren Gebläse 31, 32 verbunden. Die Spreu wird von den Wurfgebläsen 26, 27 über die Spreukanäle 29, 30 zu den weiteren Gebläsen 31, 32 gefördert, die die Spreu dann in den jeweiligen Außenbereich des Strohhäckslerverteilerkastens 33 fördern.

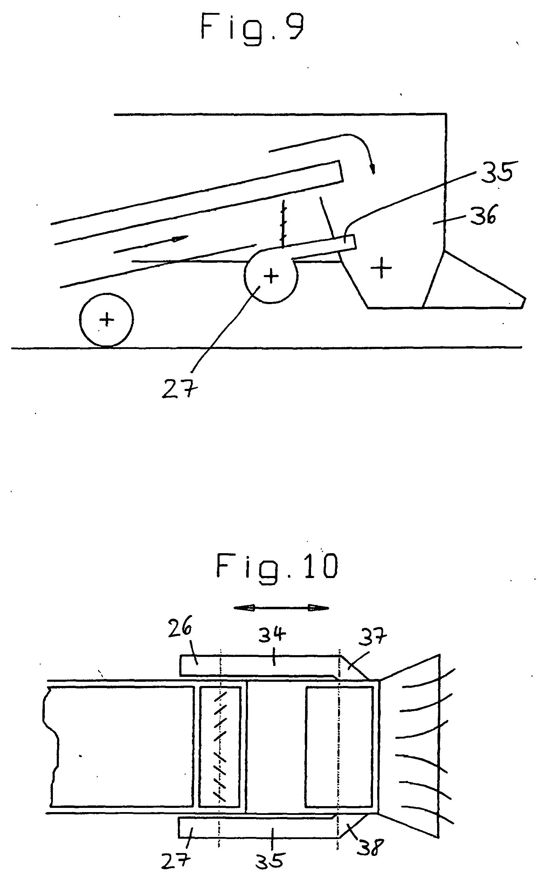

Bei der Ausführungsform nach den Fig. 9 und 10 sind die Wurfgebläse 26 und 27 mit jeweils einem Spreukanal 34, 35 versehen, der in die Strohhaube 36 des Mähdreschers mündet. Die Spreukanäle 34, 35 verlaufen zunächst von den Wurfgebläsen 26 und 27 weg parallel zur Fahrtrichtung des Mähdreschers. Sie sind an ihren Enden 37, 38 in Richtung nach innen abgewinkelt.

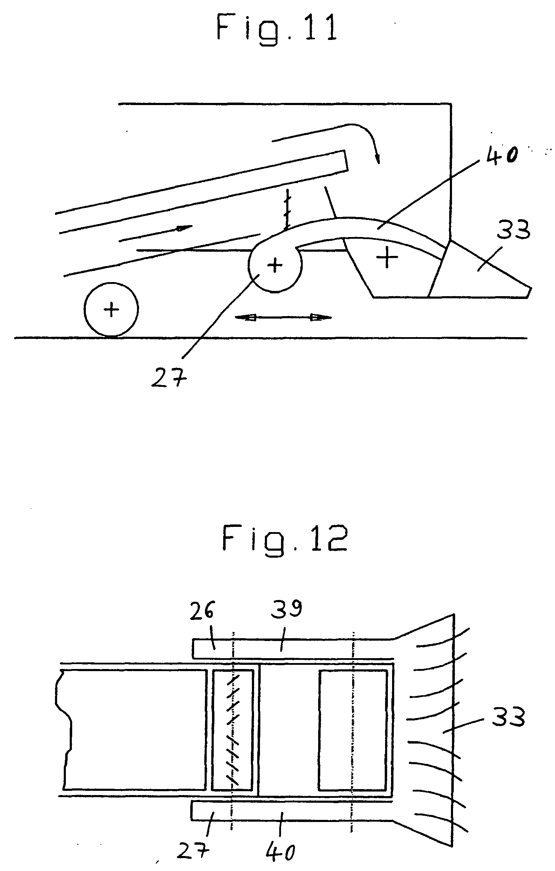

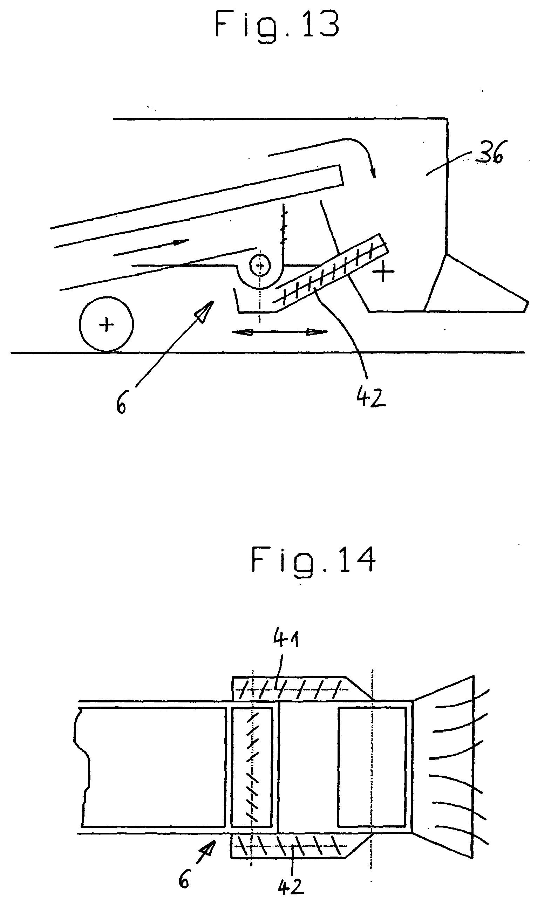

Bei der Ausführungsform nach den Fig. 11 und 12 sind die Wurfgebläse 26, 27 mit Spreukanälen 39, 40 versehen, die die Spreu in den jeweiligen Außenbereich des Strohhäckslerverteilerkastens 33 fördern.

Bei der Ausführungsform nach den Fig. 13 und 14 ist auf beiden Seiten des Spreuverteilers 6 jeweils ein Schneckenförderer 41, 42 vorgesehen, dessen vorderes unteres Ende jeweils unter dem Trog des Spreuverteilers liegt und die die Spreu in die Strohhaube 36 des Mähdreschers fördern.

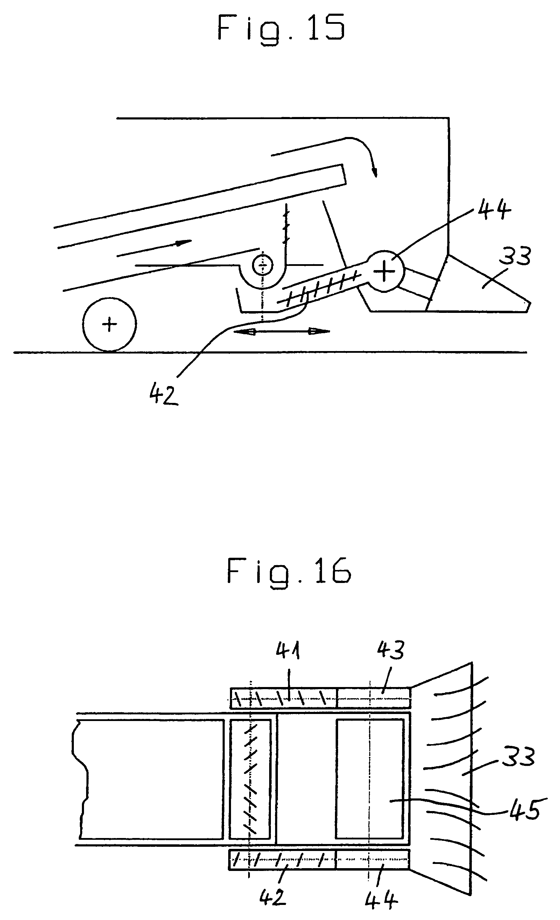

Bei der Variante nach den Fig. 15 und 16 fördern die Schneckenförderer 41, 42 die Spreu in jeweils ein weiteres Gebläse 43, 44, die seitlich an dem Strohhäcksler 45 angeordnet sind und deren horizontale Drehachsen mit der Drehachse des Strohhäckslers fluchten. Die weiteren Gebläse 43, 44 fördern die Spreu in die Außenbereiche des Strohhäckslerverteilerkastens 33.

## Patentansprüche

1. Spreuverteiler für einen Mähdrescher oder dergleichen zum Verteilen der Spreu, mit einem Trog (8) mit einer darin antreibbar gelagerten Schnecke (9),
**dadurch gekennzeichnet,**
**daß** hinter dem Spreuverteiler (6) bzw. dem Trog (8) ein nach oben weisendes Spreuteilungsblech (12) vorgesehen ist
und **daß** der Spreuverteiler (6) bzw. der Trog (8) nach hinten verfahrbar ist, so daß das Spreuteilungsblech (12) im Bereich der Vorderseite des Spreuverteilers (6) liegt.

2. Spreuverteiler nach Anspruch 1, **dadurch gekennzeichnet, daß** der Spreuverteiler (6) bzw. der Trog (8) in seinen Außenbereichen jeweils eine Öffnung (20, 21) in seinem Boden aufweist.

3. Spreuverteiler nach einem der vorhergehenden Ansprüche, **dadurch gekennzeichnet, daß** in den Außenbereichen des Spreuverteilers (6) bzw. des Troges (8) jeweils ein Gebläse (22, 23) vorgesehen ist.

4. Spreuverteiler nach einem der vorhergehenden Ansprüche, **dadurch gekennzeichnet, daß** in den Außenbereichen des Spreuverteilers (6) bzw. des Troges (8) jeweils ein Wurfgebläse (26, 27) vorgesehen ist.

5. Spreuverteiler nach Anspruch 3 oder 4, **dadurch gekennzeichnet, daß** die Gebläse (22, 23) bzw. Wurfgebläse (26, 27) drehbar gelagert sind.

6. Spreuverteiler nach einem der Ansprüche 3 bis 5, **dadurch gekennzeichnet, daß** am Gebläseauswurf einer oder mehrere Luftflügel und/oder Leitbleche (28) und/oder Finger vorgesehen sind.

7. Spreuverteiler nach Anspruch 6, **dadurch gekennzeichnet, daß** die Luftflügel und/oder Leitbleche (28) und/oder Finger verstellbar sind.

8. Spreuverteiler nach einem der Ansprüche 4 bis 7, **dadurch gekennzeichnet, daß** die Wurfgebläse (26, 27) in jeweils ein weiteres Gebläse (31, 32) fördern.

9. Spreuverteiler nach einem der Ansprüche 4 bis 8, **dadurch gekennzeichnet, daß** die Wurfgebläse (26, 27) mit einem Spreukanal (29, 30; 34, 35; 39, 40) versehen sind.

10. Spreuverteiler nach einem der vorhergehenden Ansprüche, **dadurch gekennzeichnet, daß** in den Außenbereichen des Spreuverteilers (6) bzw. des Troges (8) jeweils ein Schneckenförderer (41, 42) vorgesehen ist.

11. Spreuverteiler nach Anspruch 10, **gekennzeichnet durch** jeweils ein weiteres Gebläse (43, 44) an den Enden der Schneckenförderer (41, 42).

12. Mähdrescher,
**gekennzeichnet durch**
einen Spreuverteiler nach einem der Ansprüche 1 bis 11.

13. Mähdrescher nach Anspruch 12, **gekennzeichnet durch** einen Strohhäcksler (14, 45).

14. Mähdrescher nach Anspruch 13, **dadurch gekennzeichnet, daß** der Strohhäcksler abdeckbar ist, vorzugsweise durch ein Blech, vorzugsweise durch ein verschwenkbares Blech (15).

15. Mähdrescher nach Anspruch 13 oder 14, **dadurch gekennzeichnet, daß** an den Strohhäcksler weitere Gebläse vorgesehen sind.

16. Mähdrescher nach einem der Ansprüche 12 bis 15, **dadurch gekennzeichnet, daß** der Spreuverteiler (6) ein Gebläse (22, 23) oder Wurfgebläse (26, 27) mit einem in die Strohhaube (36) des Mähdreschers oder in den Außenbereich des Strohhäcksler-Verteilerkastens (33) weisenden Spreukanal (34, 35; 39, 40) aufweist.

17. Mähdrescher nach einem der Ansprüche 12 bis 16, **dadurch gekennzeichnet, daß** der Spreuverteiler einen Schneckenförderer (41, 42) aufweist, der die Spreu in die Strohhaube (36) des Mähdreschers oder zu weiteren Gebläsen (43, 44) fördert.

## Claims

1. Chaff spreading device for a combine or the like for spreading the chaff, having a trough (8) with a screw (9) mounted therein such that it can be driven, **characterized in that** behind the chaff spreading device (6) or the trough (8), a chaff dividing plate (12) pointing upwards is provided, and **in that** the chaff spreading device (6) or the trough (8) can be moved rearwards, so that the chaff dividing plate (12) is located in the region of the front side of the chaff spreading device (6).

2. Chaff spreading device according to Claim 1, **characterized in that** in its outer regions, the chaff spreading device (6) or the trough (8) in each case has an opening (20, 21) in its base.

3. Chaff spreading device according to one of the preceding claims, **characterized in that** in the outer regions of the chaff spreading device (6) or the trough (8), in each case a blower (22, 23) is provided.

4. Chaff spreading device according to one of the preceding claims, **characterized in that** in the outer regions of the chaff spreading device (6) or the trough (8), in each case an ejector blower (26, 27) is provided.

5. Chaff spreading device according to Claim 3 or 4, **characterized in that** the blowers (22, 23) or ejector blowers (26, 27) are rotatably mounted.

6. Chaff spreading device according to one of Claims 3 to 5, **characterized in that** one or more air vanes and/or guide plates (28) and/or fingers are provided on the blower outlet.

7. Chaff spreading device according to Claim 6, **characterized in that** the air vanes and/or guide plates (28) and/or fingers are adjustable.

8. Chaff spreading device according to one of Claims 4 to 7, **characterized in that** the ejector blowers (26, 27) in each case feed a further blower (31, 32).

9. Chaff spreading device according to one of Claims 4 to 8, **characterized in that** the ejector blowers (26, 27) are provided with a chaff duct (29, 30; 34, 35; 39, 40).

10. Chaff spreading device according to one of the preceding claims, **characterized in that** in the outer regions of the chaff spreading device (6) or the trough (8), in each case a screw conveyor (41, 42) is provided.

11. Chaff spreading device according to Claim 10, **characterized by** in each case a further blower (43, 44) at the ends of the screw conveyors (41, 42).

12. Combine, **characterized by** a chaff spreading device according to one of Claims 1 to 11.

13. Combine according to Claim 12, **characterized by** a chaff cutter (14, 45).

14. Combine according to Claim 13, **characterized in that** the chaff cutter can be covered, preferably by a plate, preferably by a pivotable plate (15).

15. Combine according to Claim 13 or 14, **characterized in that** further blowers are provided on the chaff cutter.

16. Combine according to one of Claims 12 to 15, **characterized in that** the chaff spreading device (6) has a blower (22, 23) or ejector blower (26, 27) having a chaff duct (34, 35; 39, 40) pointing into the straw chute (36) of the combine or into the outer region of the chaff-cutter spreading box (33).

17. Combine according to one of Claims 12 to 16, **characterized in that** the chaff spreading device has a screw conveyor (41, 42) which conveys the chaff into the straw chute (36) of the combine or to further blowers (43, 44).

## Revendications

1. Dispositif d'épandage de balle pour moissonneuse-batteuse ou similaire, destiné à épandre la balle, comportant une cuve (8) avec une vis d'Archimède (9) montée dans celle-ci de manière à pouvoir être entraînée, **caractérisé en ce qu'**il est prévu en arrière du dispositif d'épandage de balle (6) ou de la cuve (8) une tôle d'épandage de balle (12) dirigée vers le haut, et **en ce que** le dispositif d'épandage de balle (6) ou la cuve (8) est mobile vers l'arrière, de sorte que la tôle d'épandage de balle (12) se trouve dans la zone du côté avant du dispositif d'épandage de balle (6).

2. Dispositif d'épandage de balle selon la revendication 1, **caractérisé en ce que** le dispositif d'épandage de balle (6) ou la cuve (8) comprend dans son plancher, dans ses zones extérieures, une ouverture respective (20, 21).

3. Dispositif d'épandage de balle selon l'une des revendications précédentes, **caractérisé en ce qu'**une souffleuse respective (22, 23) est prévue dans les zones extérieures du dispositif d'épandage de balle (6) ou de la cuve (8).

4. Dispositif d'épandage de balle selon l'une des revendications précédentes, **caractérisé en ce qu'**une souffleuse à éjection respective (26, 27) est prévue dans les zones extérieures du dispositif d'épandage de balle (6) ou de la cuve (8).

5. Dispositif d'épandage de balle selon l'une ou l'autre des revendications 3 et 4, **caractérisé en ce que** la souffleuse (22, 23) ou la souffleuse à éjection (26, 27) sont montées mobiles en rotation.

6. Dispositif d'épandage de balle selon l'une ou l'autre des revendications 3 et 5, **caractérisé en ce qu'**il est prévu, au niveau de l'éjection de la souffleuse, une ou plusieurs ailettes à air et/ou tôles de guidage (28) et/ou un ou plusieurs doigts.

7. Dispositif d'épandage de balle selon la revendication 6, **caractérisé en ce que** les ailettes à air et/ou tôles de guidage (28) et/ou doigts sont réglables.

8. Dispositif d'épandage de balle selon l'une des revendications 4 à 7, **caractérisé en ce que** les souffleuses à éjection (26, 27) convoient chacune dans une autre souffleuse (31, 32).

9. Dispositif d'épandage de balle selon l'une des revendications 4 à 8, **caractérisé en ce que** les souffleuses à éjection (26, 27) sont pourvues d'un canal à balle (29, 30 ; 34, 35 ; 39, 40).

10. Dispositif d'épandage de balle selon l'une des revendications. précédentes, **caractérisé en ce qu'**un convoyeur à vis d'Archimède respectif (41, 42) est prévu dans les zones extérieures du dispositif d'épandage de balle (6) ou de la cuve (8).

11. Dispositif d'épandage de balle selon la revendication 10, **caractérisé par** une autre souffleuse respective (43, 44) aux extrémités des convoyeurs à vis d'Archimède (41, 42).

12. Moissonneuse-batteuse **caractérisée par** un dispositif d'épandage de balle selon l'une des revendications 1 à 11.

13. Moissonneuse-batteuse selon la revendication 12, **caractérisée par** un hache-paille (14, 45).

14. Moissonneuse-batteuse selon la revendication 13, **caractérisée en ce que** le hache-paille est susceptible d'être recouvert, de préférence par une tôle, de préférence par une tôle mobile en basculement (15).

15. Moissonneuse-batteuse selon l'une ou l'autre des revendications 13 et 14, **caractérisée en ce que** d'autres souffleuses sont prévues sur le hache-paille.

16. Moissonneuse-batteuse selon l'une des revendications 12 à 15, **caractérisée en ce que** le dispositif d'épandage de balle (6) comprend une souffleuse (22, 23) ou une souffleuse à éjection (26, 27) comportant un canal à balle (34, 35 ; 39, 40) dirigé dans la coiffe de paille (36) de la moissonneuse-batteuse ou dans la zone extérieure du caisson d'épandage (33) du hache-paille.

17. Moissonneuse-batteuse selon l'une des revendications 12 à 16, **caractérisée en ce que** le dispositif d'épandage de balle comprend un convoyeur à vis d'Archimède (41, 42) qui convoie la balle dans la coiffe de paille (36) de la moissonneuse-batteuse ou vers d'autres souffleuses (43, 44).
